# FASCICULE DE BREVET EUROPEEN

(11) **EP 1 227 951 B1**
(45) Date de publication et mention de la délivrance du brevet: **15.06.2005**
(21) Numéro de dépôt: 00974616.5
(22) Date de dépôt: 31.10.2000
(51) Int. Cl.: B60P 3/10

(54) **REMORQUE POUR LA MISE A L'EAU, LA SORTIE D'EAU ET LE TRANSPORT TERRESTRE D'UNE EMBARCATION**
ANHÄNGER ZUM ANHEBEN, ABSETZEN UND ZUM STRASSENTRANSPORT EINES BOOTES
TRAILER FOR LAUNCHING, BEACHING AND TRANSPORTING ON LAND A BOAT

(30) Priorité: 04.11.1999 FR 9913802
(43) Date de publication de la demande: 07.08.2002
(73) Titulaire: Nauti Park, 44320 Saint Viaud (FR)
(72) Inventeur: REQUIER, Christophe, F-56130 Nivillac (FR); REQUIER, Guy, F-44600 Saint Nazaire (FR)
(74) Mandataire: Laget, Jean-Loup
(86) Numéro de dépôt international: PCT/FR2000/003036
(87) Numéro de publication internationale: WO 2001/032467

(56) Documents cités:
- DE-U- 1 793 580
- FR-A- 1 563 785
- GB-A- 912 889
- US-A- 2 332 991
- US-A- 2 822 100
- US-A- 3 572 743
- US-A- 5 857 823

## Description

La présente invention concerne une remorque pour la mise à l'eau, la sortie d'eau et le transport terrestre d'une embarcation selon le préambule de la revendication n°1. Ces caractéristiques sont révélées par exemple dans le document US 5857823 A.

L'invention concerne plus particulièrement une remorque du type constitué principalement d'un châssis roulant porteur, attelable à un véhicule tracteur, le corps du châssis étant constitué de deux longerons porteurs parallèles reliés à une extrémité par une traverse pour affecter en plan horizontal une forme générale de U. De telles remorques sont généralement équipées à l'avant et à l'arrière de patins supports de carène orientables. Toutefois, ces patins, nécessitant un réglage précis de leur position, engendrent des temps de montage longs et fastidieux. Par ailleurs, de tels patins ne permettent pas la réception d'embarcations de dimensions diverses. Enfin, ces patins peuvent, dans le cas d'un stockage de longue durée, générer une déformation ponctuelle de la coque de par leur géométrie et leurs dimensions.

Un but de la présente invention est de pallier les inconvénients précités en proposant une remorque dont la conception permet d'une part de ne générer aucune déformation de la coque de l'embarcation, y compris dans le cas d'un stockage sur remorque de longue durée, d'autre part de s'adapter à des dimensions de longueur d'embarcation et de tirant d'eau d'embarcations diverses sans nécessiter l'utilisation d'organes ou d'accessoires supplémentaires.

A cet effet, l'invention a pour objet une remorque, pour la mise à l'eau, la sortie d'eau et le transport terrestre d'une embarcation du type constitué principalement d'un châssis roulant porteur, de préférence à flèche brisée, attelable à un véhicule tracteur, le corps du châssis étant constitué de deux longerons porteurs parallèles reliés à une extrémité par une traverse pour affecter en plan horizontal une forme générale de U, caractérisée en ce qu'il est prévu, entre les longerons du châssis porteur, une traverse support d'étrave à profilé en V, ladite traverse support d'étrave à profil en V étant montée pivotante autour d'un axe s'étendant dans un plan transversal à l'axe longitudinal du châssis porteur pour prendre une inclinaison fonction du profil d'étrave à supporter.

Selon une forme de réalisation préférée de l'invention, les extrémités de la traverse support d'étrave en V sont constituées d'axes cylindriques reposant sur des sabots de limitation de pivotement, eux-mêmes en appui sur la face supérieure des longerons porteurs de la remorque.

On obtient ainsi une orientation automatique du profil en V de manière à permettre l'auto-alignement de celui-ci en fonction de l'étrave du bateau.

L'invention sera bien comprise à la lecture de la description suivante d'exemples de réalisation, en référence aux dessins annexés dans lesquels :
la figure 1 représente une vue schématique de profil d'une remorque conforme à l'invention ;
la figure 2 représente une vue schématique de dessus d'une remorque conforme à l'invention ;

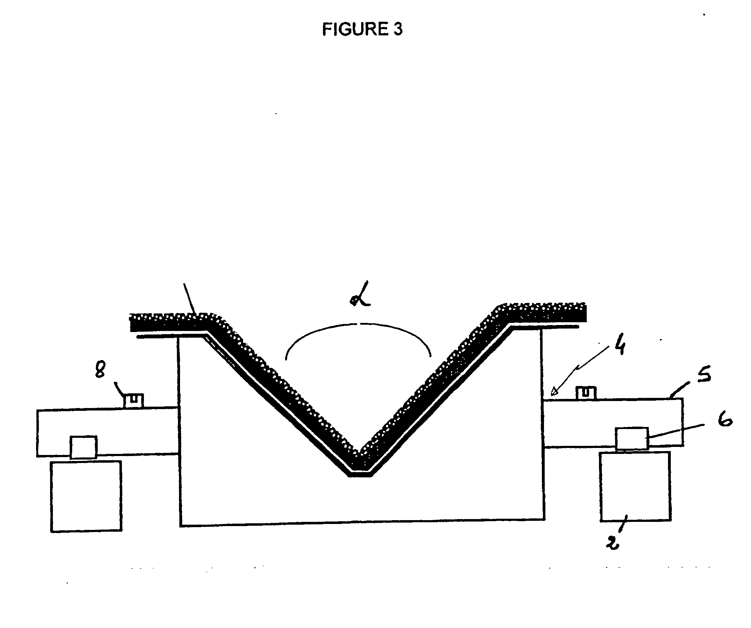

la figure 3 représente une vue en coupe transversale d'une remorque conforme à l'invention ;
la figure 4 représente une vue schématique en plan de la traverse support d'étrave et
la figure 5 représente une vue schématique partielle d'un patin support de carène conforme à l'invention.

La remorque 1, objet de l'invention, est plus particulièrement destinée à la mise à l'eau, la sortie d'eau et le transport terrestre d'une embarcation, le terme "embarcation" devant être entendu au sens large du terme. Une telle remorque permet en particulier la manutention de bateaux de 5,50 m jusqu'à 14 m de longueur et des tirants d'eau pouvant atteindre 2,20 m.

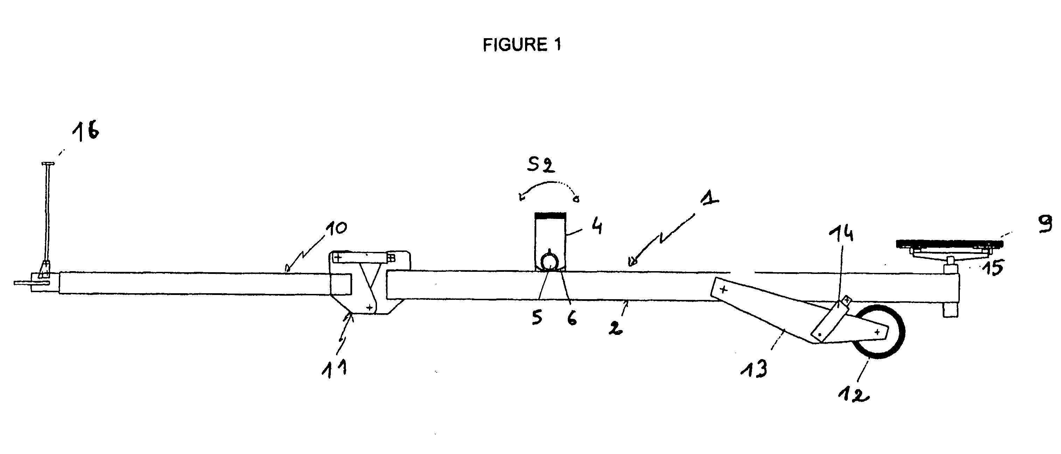

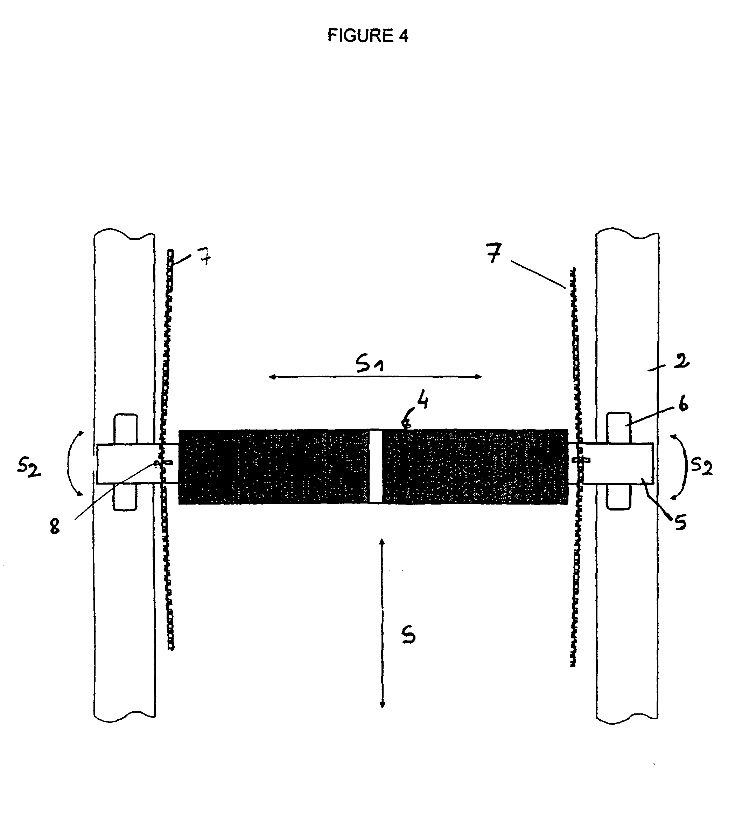

De manière en soi connue, cette remorque 1 est constituée d'un châssis roulant porteur attelable à un véhicule tracteur. Le corps du châssis est constitué de deux longerons 2 porteurs parallèles reliés à une extrémité par une traverse 3 pour affecter en plan horizontal une forme générale de U. La conception des longerons et des traverses est telle qu'elle permet une immersion de la remorque. Ce châssis comporte encore une traverse 4 support d'étrave à profil en V s'étendant entre les longerons 2 du châssis. Cette traverse 4 support d'étrave à profil en V est montée pivotante sur les longerons 2 du châssis autour d'un axe s'étendant dans un plan transversal à l'axe longitudinal du châssis porteur pour prendre une inclinaison fonction du profil d'étrave à supporter. Ce déplacement à pivotement de la traverse est plus particulièrement représenté aux figures 1 et 4 au moyen d'une double flèche S2. L'axe de pivotement de la traverse 4 support d'étrave s'étend donc sensiblement perpendiculairement aux logerons 2 du châssis de la remorque.

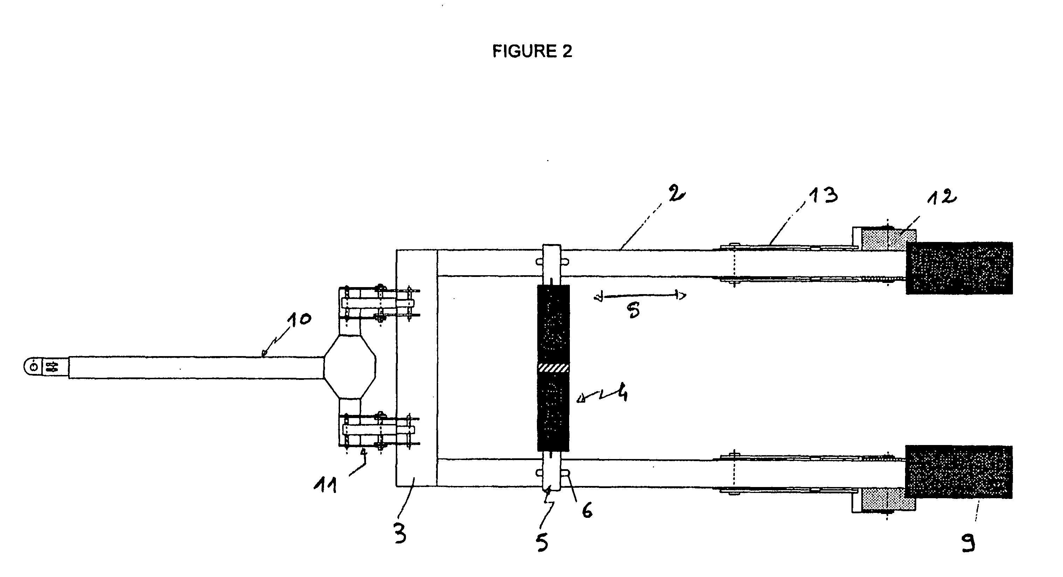

Cette traverse est plus particulièrement constituée de deux axes 5 cylindriques qui forment les extrémités de la traverse et d'un caisson disposé entre les extrémités de la traverse, ce caisson présentant une face supérieure en forme de V pour la réception de l'étrave de l'embarcation. De préférence, cette traverse 4 support d'étrave présente un v à angle α d'ouverture réglable pour s'adapter aux différentes formes d'étraves. La portion en V de la traverse est généralement munie d'un revêtement permettant d'éviter tout endommagement de l'embarcation lorsqu'elle est reçue sur ladite traverse. Les extrémités de la traverse 4 support d'étrave en V, constituées des axes 5, reposent sur des sabots 6 de limitation de pivotement. Ces sabots 6 peuvent être constitués par une simple plaque à profil courbe de manière à former sensiblement un pied à bascule de ladite traverse. Ces sabots sont eux-mêmes en appui sur la face supérieure des longerons 2 porteurs de la remorque. Du fait de cette conception de la traverse 4 support d'étrave, cette traverse 4 support d'étrave est repositionnable à volonté longitudinalement par rapport aux longerons 2. En d'autres termes, la traverse peut être librement déplacée dans le sens de la double flèche indiquée en S à la figure 2 le long des longerons de manière à faire varier la distance entre cette traverse et la partie arrière de la remorque.

Une fois positionnée, chaque extrémité de la traverse 4 support d'étrave est assujettie aux longerons 2 du châssis de manière réglable par l'intermédiaire d'une chaîne 7 d'ancrage s'étendant en amont et en aval du point de pivotement de la traverse 4 support d'étrave. Cette chaîne est plus particulièrement représentée à la figure 4. Cette chaîne est donc fixée, à chacune de ses extrémités, aux longerons de la remorque. Elle passe par dessus la traverse 4 support d'étrave et vient se loger à l'intérieur de paliers 8 ménagés sur les axes cylindriques constitutifs des extrémités de la traverse 4 support d'étrave. Ce maintien dans le palier s'effectue par simple coincement par emboîtement des maillons de la chaîne 7 dans lesdits paliers. Ainsi, le repositionnement de la traverse 4 support d'étrave peut s'effectuer de manière aisée. Il suffit de soulever la chaîne et de déplacer ladite traverse dans le sens S. Par ailleurs, du fait que cette traverse repose simplement par simple appui au moyen des sabots 6 sur les longerons 2, il est également possible de faire varier le positionnement de la traverse 4 support d'étrave entre lesdits longerons comme l'indique la double flèche S1 de telle sorte que la pointe du V peut ne pas s'étendre sensiblement dans l'axe longitudinal médian de la remorque. Cette liberté de fonctionnement autorise l'auto alignement de la traverse support d'étrave grâce au déplacement maîtrisé du V selon les axes S1 et S2.

Outre la traverse 4 support d'étrave, le châssis comporte encore, au droit des longerons 2, au voisinage de leur extrémité libre, au moins deux patins 9 supports de carène. Ces patins 9 sont montés orientables de préférence sur trois axes. Ces patins 9 sont encore réalisés flottants de manière à occuper une position sensiblement horizontale parallèle à la surface de l'eau lorsque la remorque 1 est immergée.

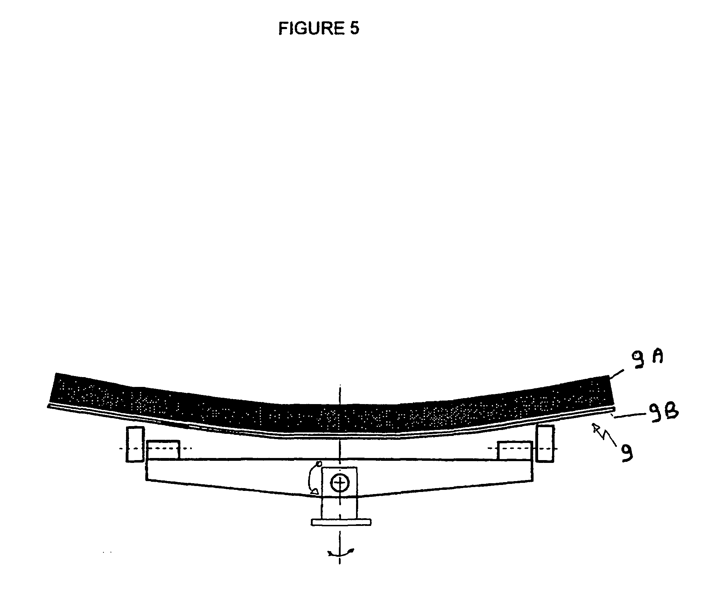

Dans l'exemple de réalisation des patins représenté à la figure 5, ces patins sont constitués d'une plaque 9A réalisée en un matériau flottant, cette plaque reposant sur une tôle mince 9B, l'ensemble constituant le patin 9. Ces patins sont équipés d'un support articulé de type cardan permettant une liaison à cardan avec une chandelle 15 reliant l'articulation du patin 9 aux longerons 2 de la remorque. Ces chandelles 15 constituent des vérins mécaniques en soi connu. Ces chandelles 15 sont généralement reliées de manière réglable en hauteur et position sur les longerons 2 pour permettre un positionnement à écartement variable des patins 9. Du fait de leur conception, les patins 9 sont réalisés flexibles et peuvent épouser les formes de carène supportées. Ces patins sont donc déformables dans le sens longitudinal et dans le sens transversal de manière à épouser parfaitement les formes de carène.

Le détail des articulations de patins supports de carène aux chandelles 15 ne sera pas décrit plus en détail car il est bien connu à ceux versés dans cet art.

Cette remorque comporte encore de manière en soi connue une flèche 10 brisée d'attelage. Cette flèche d'attelage 10 brisée présente une articulation 11 commandée par voie hydraulique. Le boîtier de commande, représenté en 16 aux figures, est porté par le timon d'attelage. L'articulation 11 est constituée d'une articulation sensiblement en forme de V, les branches du V étant conçues à écartement variable au moyen d'un vérin pouvant être actionné à partir du véhicule tracteur. Cette articulation 11, en coopération avec le vérin hydraulique, permet une correction d'assiette de la remorque.

La remorque est encore équipée de roues 12 de portage disposées généralement à l'arrière de la remorque. Ces roues 12 de portage de la remorque sont montées sur des bras 13 pivotants articulés sur les longerons 2 du châssis. L'angle de ces bras 13 est réglable par l'intermédiaire de vérins hydrauliques 14 entre châssis et bras 13 pivotant. A nouveau, ces vérins hydrauliques sont commandés de manière indépendante de telle sorte qu'on puisse agir sur la roue droite indépendamment de la roue gauche et inversement. L'ensemble des commandes de ces vérins sont à nouveau disposés dans le boîtier 16 de commande. Des connexions hydrauliques peuvent encore être prévues à partir de ce boîtier 16 en direction du véhicule tracteur.

## Revendications

1. Remorque (1), pour la mise à l'eau, la sortie d'eau et le transport terrestre d'une embarcation du type constitué principalement d'un châssis roulant porteur, de préférence à flèche brisée, attelable à un véhicule tracteur, le corps du châssis étant constitué de deux longerons (2) porteurs parallèles reliés à une extrémité par une traverse (3) pour affecter en plan horizontal une forme générale de U,
**caractérisée en ce qu'**il est prévu, entre les longerons (2) du châssis porteur, une traverse (4) support d'étrave à profilé en V, ladite traverse (4) support d'étrave à profil en V étant montée pivotante autour d'un axe s'étendant dans un plan transversal à l'axe longitudinal du châssis porteur pour prendre une inclinaison fonction du profil d'étrave à supporter.

2. Remorque (1) selon la revendication 1,
**caractérisée en ce que** les extrémités de la traverse (4) support d'étrave en V sont constituées d'axes (5) cylindriques reposant sur des sabots (6) de limitation de pivotement, eux-mêmes en appui sur la face supérieure des longerons (2) porteurs de la remorque.

3. Remorque (1) selon l'une des revendications 1 et 2,
**caractérisée en ce que** la traverse (4) support d'étrave est repositionnable à volonté longitudinalement par rapport aux longerons (2).

4. Remorque (1) selon l'une des revendications 1 à 3,
**caractérisée en ce que** chaque extrémité de la traverse (4) support d'étrave est assujettie aux longerons (2) du châssis de manière réglable par l'intermédiaire d'une chaîne (7) d'ancrage s'étendant en amont et en aval du point de pivotement de la traverse (4) support d'étrave.

5. Remorque (1) selon l'une des revendications 1 à 4,
**caractérisée en ce que** la traverse (4) support d'étrave présente un V à angle (α) d'ouverture réglable.

6. Remorque (1) selon l'une des revendications 1 à 5,
**caractérisée en ce que** le châssis comporte, outre la traverse (4) support d'étrave, au droit des longerons (2), au voisinage de leur extrémité libre, au moins deux patins (9) supports de carène, ces patins (9), montés orientables de préférence sur trois axes, étant réalisés flottants de manière à occuper une position sensiblement horizontale parallèle à la surface de l'eau lorsque la remorque (1) est immergée.

7. Remorque (1) selon la revendication 6,
**caractérisée en ce que** les patins (9) sont réalisés flexibles pour épouser les formes de carène supportées.

8. Remorque (1) selon l'une des revendications 1 à 7,
**caractérisée en ce que** la flèche (10) brisée d'attelage présente une articulation (11) commandée par voie hydraulique.

9. Remorque (1) selon l'une des revendications 1 à 8,
**caractérisée en ce qu'**elle comprend des roues (12) de portage de la remorque (1) montées sur des bras (13) pivotants, articulés sur les longerons (2) du châssis, l'angle de ces bras (13) étant réglable par l'intermédiaire des vérins hydrauliques (14) entre châssis et bras (13) pivotant.

## Patentansprüche

1. Anhänger (1) zum Absetzen, Anheben und zum terrestrischen Transport eines Bootes, im wesentlichen bestehend aus einem rollenden Tragrahmen, vorzugsweise mit geknickter Deichsel, besteht, welche an ein Zugfahrzeug angehängt werden kann, wobei der Körper des Rahmens aus zwei tragenden Längsholmen (2) besteht, die parallel verlaufen und an einem Ende durch einen Steg (3) verbunden sind, um in einer waagerechten Ebene insgesamt U-förmig ausgebildet zu sein,
**dadurch gekennzeichnet, dass** zwischen den Längsholmen (2) des Tragrahmens ein als V-Profil ausgebildeter, den Bug tragender Steg (4) vorgesehen ist, der um eine Achse schwenkbar montiert ist, die sich in einer quer zur Längsachse des Tragrahmens verlaufenden Ebene erstreckt, um eine von der Kontur des zu tragenden Bugs abhängige Neigung einzunehmen.

2. Anhänger (1) nach Anspruch 1, **dadurch gekennzeichnet, dass** die Enden des V-förmigen, den Bug tragenden Stegs durch zylindrische Achsen (5) gebildet sind, welche auf Schuhen (6) zur Begrenzung der Schwenkbewegung ruhen, welche selbst auf der oberen Seite der tragenden Längsträger (2) des Anhängers aufliegen.

3. Anhänger (1) nach einem der Ansprüche 1 und 2, **dadurch gekennzeichnet, dass** der den Bug tragende Steg (4) zu den Längsholmen (2) in Längsrichtung frei repositioniert werden kann.

4. Anhänger (1) nach einem der Ansprüche 1 bis 3, **dadurch gekennzeichnet, dass** jedes Ende des den Bug tragenden Stegs (4) an den Längsholmen (2) des Rahmens einstellbar über eine Verankerungskette (7) befestigt ist, die sich vor und hinter dem Schwenkpunkt des den Bug tragenden Stegs (4) erstreckt.

5. Anhänger (1) nach einem der Ansprüche 1 bis 4, **dadurch gekennzeichnet, dass** der den Bug tragende Steg (4) ein V mit einem Winkel (α) mit einstellbarer Weite aufweist.

6. Anhänger (1) nach einem der Ansprüche 1 bis 5, **dadurch gekennzeichnet, dass** der Rahmen außer dem den Bug tragenden Steg (4) rechtwinkelig zu den Längsholmen (2) in der Nähe von deren freien Ende mindestens zwei den Unterwasserrumpf tragende Kufen (9) aufweist, wobei diese Kufen (9), welche vorzugsweise nach drei Achsen verstellbar montiert sind, schwimmend ausgeführt sind, derart, dass sie eine weitestgehend waagerechte, parallel zur Wasseroberfläche liegende Position einnehmen, wenn der Anhänger (1) eingetaucht ist.

7. Anhänger (1) nach Anspruch 6, **dadurch gekennzeichnet, dass** die Kufen (9) flexibel ausgeführt sind, um sich den getragenen Unterwasserrumpf-Formen anzupassen.

8. Anhänger (1) nach einem der Ansprüche 1 bis 7, **dadurch gekennzeichnet, dass** die geknickte Anhängedeichsel (10) ein hydraulisch gesteuertes Gelenk (11) aufweist.

9. Anhänger (1) nach einem der Ansprüche 1 bis 8, **dadurch gekennzeichnet, dass** er den Anhänger (1) tragende Räder (12) aufweist, die an Schwenkarmen (13) montiert sind, die an den Längsholmen (2) des Rahmens angelenkt sind, wobei der Winkel dieser Arme (13) durch hydraulische Zylinder (14) zwischen Rahmen und Schwenkarm (13) einstellbar ist.

## Claims

1. Trailer (1) for the launching, landing and land transport of a boat, said trailer being of the type made up mainly of a load-bearing rolling chassis, preferably of the folding-shaft type, which can be coupled to a tractor vehicle, the body of the chassis being made up of two parallel load-bearing longitudinal girders (2) connected at one end by a cross-piece (3) so as to assume the general shape of a U in the horizontal plane,
**characterised in that** there is provided, between the longitudinal girders (2) of the load-bearing chassis, a stem-supporting cross-piece (4) with a V-shaped section, the said stem-supporting cross-piece (4) with a V-shaped profile being mounted so as to pivot about an axis extending in a plane transverse to the longitudinal axis of the load-bearing chassis, in order to adopt an inclination which depends on the stem profile to be supported.

2. Trailer (1) according to claim 1,
**characterised in that** the ends of the V-shaped stem-supporting cross-piece (4) are made up of cylindrical axles (5) resting on saddles which limit pivoting and which themselves rest on the upper face of the load-bearing longitudinal girders (2) of the trailer.

3. Trailer (1) according to one of claims 1 and 2,
**characterised in that** the stem-supporting cross-piece (4) can be repositioned longitudinally at will in relation to the longitudinal girders (2).

4. Trailer (1) according to one of claims 1 to 3,
**characterised in that** each end of the stem-supporting cross-piece (4) is secured to the longitudinal girders (2) of the chassis in an adjustable manner via an anchoring chain (7) extending upstream and downstream of the point at which said stem-supporting cross-piece (4) pivots.

5. Trailer (1) according to one of claims 1 to 4,
**characterised in that** the stem-supporting cross-piece (4) has a V with an adjustable angle (a) of opening.

6. Trailer (1) according to one of claims 1 to 5,
**characterised in that** the chassis has, in addition to the stem-supporting cross-piece (4), at right angles with the longitudinal girders (2) and in the vicinity of their free end, at least two hull-supporting shoes (9), the said shoes (9), which are mounted so as to be orientatable preferably over three axes, being realised in floating form in such a way as to occupy a substantially horizontal position parallel to the surface of the water when the trailer (1) is immersed.

7. Trailer (1) according to claim 6,
**characterised in that** the shoes (9) are realised in flexible form so as to follow the shapes of hull supported.

8. Trailer (1) according to one of claims 1 to 7,
**characterised in that** the folding coupling shaft (10) has an articulation (11) which is controlled by the hydraulic method.

9. Trailer (1) according to one of claims 1 to 8,
**characterised in that** it comprises wheels (12) for carrying the trailer (1) which are mounted on pivoting arms (13) articulated on the longitudinal girders (2) of the chassis, the angle of the said arms (13) being adjustable via hydraulic jacks (14) between chassis and pivoting arm (13).
